(19) Europäisches Patentamt

European Patent Office

Office européen des brevets

(11) Veröffentlichungsnummer: **0 317 724 B1**

(12) **EUROPÄISCHE PATENTSCHRIFT**

(45) Veröffentlichungstag der Patentschrift: **18.03.92**

(51) Int. Cl.⁵: **B29C 65/20**

(21) Anmeldenummer: **88115357.1**

(22) Anmeldetag: **19.09.88**

(54) **Schweissvorrichtung zum Schweissen von Kunststoffbahnen.**

(30) Priorität: **28.09.87 DE 3732639**

(43) Veröffentlichungstag der Anmeldung:
**31.05.89 Patentblatt 89/22**

(45) Bekanntmachung des Hinweises auf die
Patenterteilung:
**18.03.92 Patentblatt 92/12**

(84) Benannte Vertragsstaaten:
**DE FR IT NL**

(56) Entgegenhaltungen:
**DE-A- 1 909 894**
**DE-A- 2 065 016**
**DE-A- 2 244 820**
**DE-B- 1 629 170**

(73) Patentinhaber: **Windmöller & Hölscher**
**Münsterstrasse 50**
**W-4540 Lengerich(DE)**

(72) Erfinder: **Voss, Hans-Ludwig, Dipl.-Ing.**
**Weststrasse 12**
**W-4540 Tecklenburg(DE)**

(74) Vertreter: **Gossel, Hans K., Dipl.-Ing. Lorenz-**
**Seidler-Gossel et al**
**Widenmayerstrasse 23**
**W-8000 München 22(DE)**

**Beschreibung**

Die Erfindung betrifft eine Schweißvorrichtung zum Schweißen von flachliegenden Bahnen oder Bahnabschnitten aus thermoplastischem Kunststoff mit zwei zueinander parallelen und relativ zueinander heb- und absenkbaren Schweißleisten, über die jeweils Teflon-Bahnen, vorzugsweise glasfaserverstärkte Teflon-Gewebebahnen, gespannt sind, die auf beidseits jeder Schweißleiste angeordnete Rollen, die deren Auf- und Abwickeln dienen, gehaltert sind.

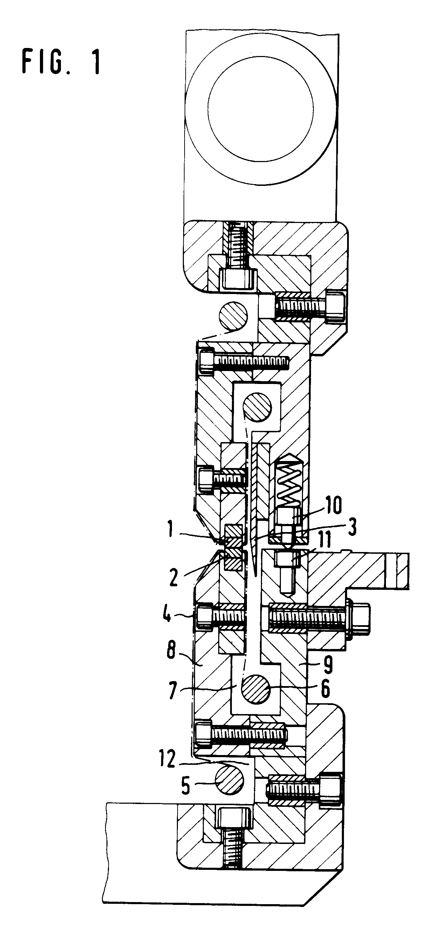

Derartige Schweißvorrichtungen sind beispielsweise aus der DE-PS 20 04 574, der DE-AS 27 43 494 sowie den DE-OS 23 58 281 und 28 45 271 bekannt. Die die Schweißleisten überspannenden Teflon-(Polytetrafluoräthylen)-Bahnen haben dabei den Zweck, ein Ankleben der Schweißleisten an den Kunststoff-Folien zu verhindern. Eine aus der Praxis bekannte Schweißvorrichtung der eingangs angegebenen Art wird nachfolgend anhand der Fig. 1 der Zeichnung beschrieben. Diese bekannte Schweißvorrichtung besteht aus den oberen und unteren Schweißbacken 2. Seitlich neben der oberen Schweißbacke 2 ist ein Trennmesser 3 vorgesehen, das zusammen mit dieser durch einen nicht dargestellten Antrieb heb-und senkbar ist. Über die Schweißleisten der oberen und unteren Schweißbacken sind Teflonbänder gespannt. Die Art der Auf- und Abrollung der Teflonbänder und deren Spannung über die Schweißleisten ist bei der oberen und unteren Schweißbacke grundsätzlich gleich, so daß diese nur anhand der unteren beschrieben wird. Das die Schweißleiste überspannende Teflonband, dessen Breite etwa der Länge der Schweißleiste entspricht, ist auf den Rollen 5,6 gehaltert, wobei das Teflonband von der Rolle 5 abgewickelt und auf die Rolle 6 aufgewickelt wird. Der Vorzug des Teflonbandes durch Aufwickeln auf die Rolle 6 und Abwickeln von der Rolle 5 erfolgt jeweils in Abhängigkeit von der Schweißzeit und der Schweißtemperatur, das heißt, das Teflonband wird nach einer bestimmten Taktzahl um eine bestimmte Länge vorgezogen, so daß für die folgende Betriebszeit eine unverbrauchte Länge des Teflonbandes zwischen den Schweißleisten zur Verfügung steht. Die der Aufwicklung des Teflonbandes dienende Rolle 6 ist in einem Raum 7 untergebracht, der zwischen der die Schweißbacke tragenden Traverse 8 und einer Traverse 9 gebildet ist, die gleichzeitig einen Festhalter für die abgeschnittenen Bahnstücke, beispielsweise Foliensäcke oder -beutel trägt. Dieser Festhalter besteht aus einem abgefederten Stempel 10, der mit einem entsprechenden Gegenstempel zusammenwirkt. Die der Abwicklung des Teflonbandes dienende Rolle ist in einer Nut 12 unterhalb der Schweißbackentraverse 8 angeordnet, und zwar in der Weise, daß sie seitlich nicht über die äußere Kontur der Schweißbackeneinheit übersteht. Beidseits der Schweißbackeneinheit sind weitere nicht dargestellte Festhalter und konstruktive Elemente vorgesehen, die während der Stillstandtaktzeiten zum Trennen und Schweißen der Folienbahn wirksam werden. Diese Elemente müssen möglichst dicht im Schweiß- und Schneidbereich angeordnet werden, damit die Folienbahn möglichst stramm gehalten wird. Da die der Auf- und Abwicklung der Teflonbahn dienenden Rollen 5,6 innerhalb der Außenkontur der Schweißeinheit liegen müssen, um eine kompakte Bauweise zu ermöglichen, ist die bekannte Schweißeinrichtung sehr aufwendig. Weiterhin ist die Wartung der bekannten Vorrichtung kompliziert und zeitaufwendig, da zum Austausch der Rollen 5,6 nach Verbrauch der Teflonbahn die Traversen 8,9 auseinandergebaut werden müssen.

Ein weiterer Nachteil der bekannten Vorrichtung besteht darin, daß die Rollen 5,6 auf langen und üblicherweise relativ dünnen Stangen aufgewickelt sind, so daß sie sich mit der Folge durchbiegen können, daß sich das über die Schweißleisten gezogene Teflonband unter Ausbildung von Falten verziehen und wellen kann.

Auch aus der DE-A-2 244 820, von welcher der Oberbegriff des Anspruchs 1 ausgeht, ist eine Schweißvorrichtung zum Schweißen von thermoplastischen Folien bekannt, bei denen Teflon-Bänder mit Stangen verbunden sind, die die zu beiden Seiten des zu schweißenden Bandes liegenden Säulen miteinander verbinden und sich über das zu schweißende Band erstrecken. Bei dieser Vorrichtung wird das zu schweißende Band in Längsrichtung der Schweißleisten durch den Schweißspalt hindurchgezogen.

Aufgabe der Erfindung ist es, eine Vorrichtung der eingangs angegebenen Art zu schaffen, die bei gedrungener Bauweise und guter und straffer Führung der Teflonbahn eine einfache Wartung gestattet und in einfacher Weise mit geringem Montageaufwand einen Austausch verbrauchter Teflonbänder gegen unverbrauchte ermöglicht.

Erfindungsgemäß wird diese Aufgabe bei einer Vorrichtung der gattungsgemäßen Art dadurch gelöst, daß die Rollen beidseits der schmalen Seiten der Schweißleisten auf quer zu diesen verlaufende Achsen gelagert sind, wobei die Teflon-Bahnen in Abhängigkeit vom Grad ihrer Abnutzung um vorgegebene Beträge in Längsrichtung über die Schweißleisten weiter bewegbar sind und daß mindestens auf jeweils einer Seite jeder Schweißleiste Stütz- oder Führungselemente vorgesehen sind, die mit jeweils einer Schweißleistenseite einen Führungskanal für einen Randbereich des Teflon-Bandes bilden. Bei der erfindungsgemäßen Schweißvorrichtung sind die die Teflon-Bänder halternden und speichernden Rollen beidseits der Enden der Schweißleisten angeordnet, also in einem Bereich, wo genügend Platz vorhanden ist und diese daher keinen Raum beanspruchen, der für andere konstruktive Teile dringend benötigt wird. Die der Auf- und Abwicklung der Teflonbänder dienenden Rollen sind durch ihre Anordnung beidseits der Schmalseiten der Schweißbacken gut zugänglich und können daher in einfacher Weise gewartet und auch ausgetauscht werden. Da bei der erfindungsgemäßen Vorrichtung die Teflonbänder in Längsrichtung über die Schweißleisten gezogen werden, brauchen diese nur eine geringe Breite aufzuweisen, so daß auch die Rollen entsprechend schmal gehalten werden können, was deren einfache Anordnung und Lagerung begünstigt.

Als Führungselemente können mit den Schweißleisten verschraubte Federbleche vorgesehen sein. Der Führungskanal kann auch zwischen der Schweißleiste und einem mit dem Schweißbacken verschraubten Schneidmesser vorgesehen sein. Die Führungselemente oder Federbleche können sich über die ganze Länge der Schweißleisten erstrecken oder aber auch abschnittweise mit Zwischenräumen vorgesehen sein.

Zweckmäßigerweise sind zwischen den schmalen Enden und den Rollenumlenkstangen oder Umlenkrollen zur Führung der Teflon-Bahnen oder -Bänder vorgesehen. Diese Umlenkstangen oder -rollen gewährleisten einen einwandfreien Auflauf der von einer Rolle abgezogenen Bahn auf die Schweißleiste und umgekehrt wieder einen exakten Auflauf der verbrauchten abgezogenen Bahn auf die aufwickelnde Rolle.

Die Rollen, deren Naben oder kerne sind zweckmäßigerweise von federbelasteten Bremselementen beaufschlagt, die die Rollen in ihren die Teflonbänder spannenden Positionen halten.

Nach einer erfinderischen Weiterentwicklung ist vorgesehen, daß die die Teflonbahn abziehende Rolle über einen Freilauf auf ihrer Achse gelagert und mit einem Hebel versehen ist, der taktwei se um kleine Winkelbeträge verschwenkt und zurückgestellt wird. Dabei wird der Hebel in einem Takt betätigt, der dem Verbrauch der Teflonbahn entspricht, so daß das verbrauchte Teflonband in kleinen Schritten abgezogen wird und die Schweißleisten immer von funktionsfähigen Teflonbändern überspannt sind. Das taktweise Verschwenken der Hebel kann von der Bewegung des oder der Schweißbacken abgeleitet sein, wobei die Rückstellung der Hebel durch Federn erfolgen kann.

Ein Ausführungsbeispiel der Erfindung wird nachstehend anhand der Zeichnung näher erläutert.

In dieser zeigt

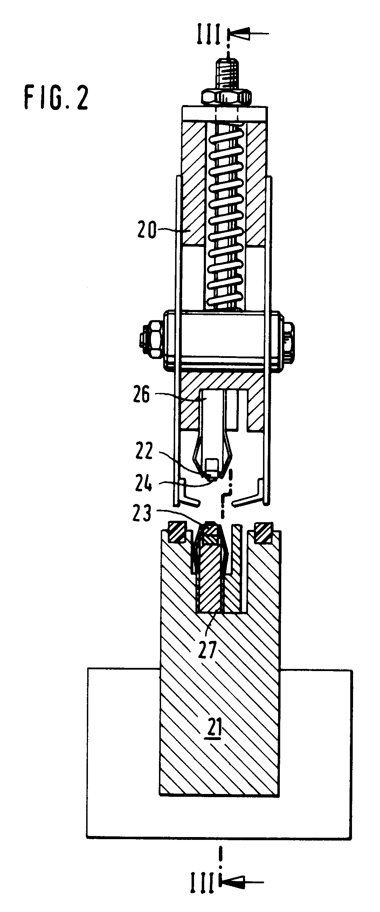

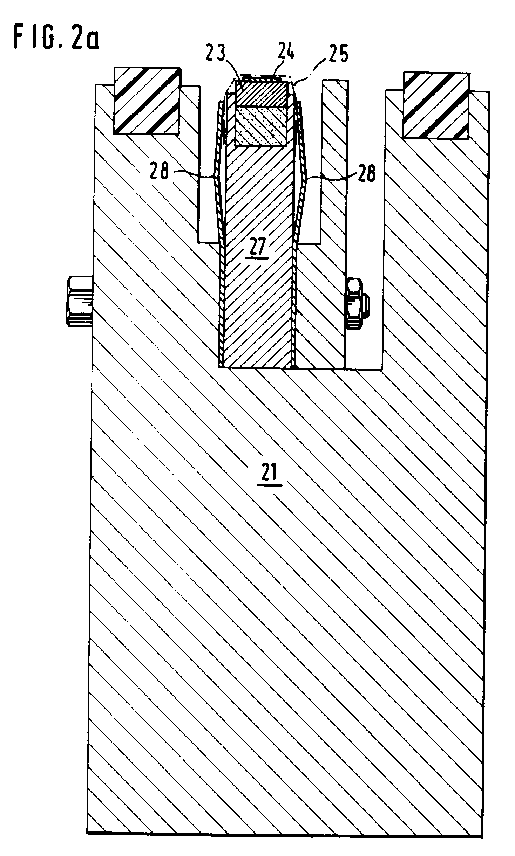

Fig.2    einen Querschnitt durch die Schweißeinrichtung,

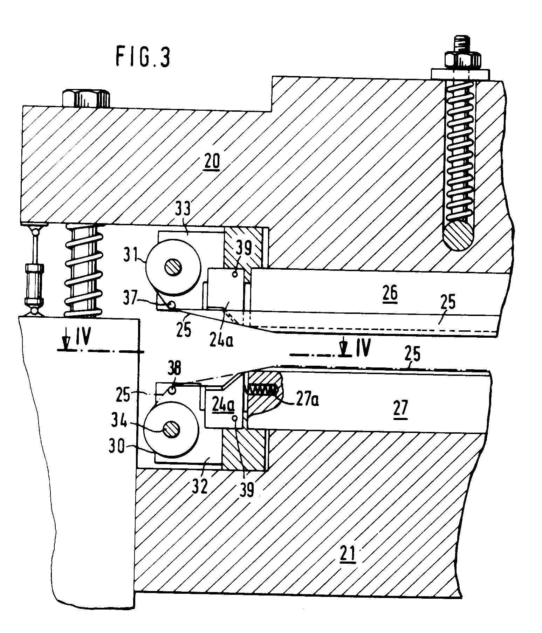

Fig.3    eine Seitenansicht einer Seite der Schweißeinrichtung, ohne Halteblech und ohne Trennmesser,

Fig.4    eine Draufsicht auf die untere Schweißbacke gemäß der Linie IV-IV nach Fig.3,

Fig.5    eine Seitenansicht der Schweißbacken in schematischer Darstellung,

Fig.6    eine Draufsicht auf die linke untere Rolle gemäß der Linie VI-VI nach Fig.5 und

Fig.7    eine Draufsicht auf die rechte obere Rolle gemäß der Linie VII-VII nach Fig. 5.

In den Schweißbacken 20, 21, von denen die untere stationär im Maschinengestell angeordnet und die obere mit einem nicht dargestellten, diese auf- und abbewegenden Antrieb versehen ist, sind parallel zueinander Schweißleisten 22,23 gehaltert. Über die einander zugewandten Stirnseiten der Schweißleisten 22,23 sind beheizbare Schweißbänder 24 geführt. Über die Schweißleisten 22,23 sind im Querschnitt U-förmig Teflonbänder 25 gespannt, deren Seitenbereiche an den Schweißleisten 22,23 oder deren Haltestücken 26,27 anliegen. Mit den Haltestücken 26,27 sind Federstahlbänder 28 verschraubt, deren freien sich bis in den Bereich der Schweißleisten erstreckenden Teile die Randbereiche der Teflonbänder überdecken und diese gegen die Schweißleisten bzw. deren Halteteile 26,27 andrücken.

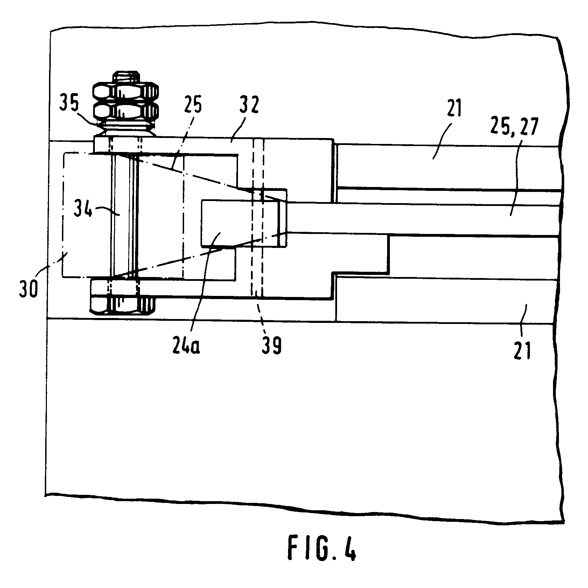

Die Teflonbänder 25 sind auf die Rollen 30,31 aufgewickelt. Diese Rollen sind auf Achsen 34 gelagert, die beidseits der Schmalseiten der Schweißleisten auf gabelförmig ausgebildeten Tragstücken 32,33 quer zu diesen an den Schweißbacken gehaltert sind. Eine Lagerung der Achawn 34 sowie die Ausbildung der Tragstücke 32 ist aus Fig.4 ersichtlich. Mit der unteren Schweißbacke 21 sind gabelförmig Träger 32,33 auf nicht dargestellter Weise verschraubt. Die Achse 34 ist durch Tellerfedern 35 vorgespannt, so daß sich das Teflonband 25 mit einstellbarer Vorspannung abziehen läßt. Die Schweißbänder 24 sind endseitig in um Achsen 39 schwenkbare Klemmstücke 24a eingespannt, wobei Federn 27a die Klemmstücke 24a zu verschwenken trachten und somit die Schweißbänder gespannt werden.

Das von den Rollen abgezogene oder auf diese auflaufende Teflonband 25 ist über Umlenkstangen 37,38 geleitet, die einen einwandfreien Ablauf und Auflauf sowie eine einwandfreie Zuführung des Teflonbandes zu den Schweißleisten gewährleisten.

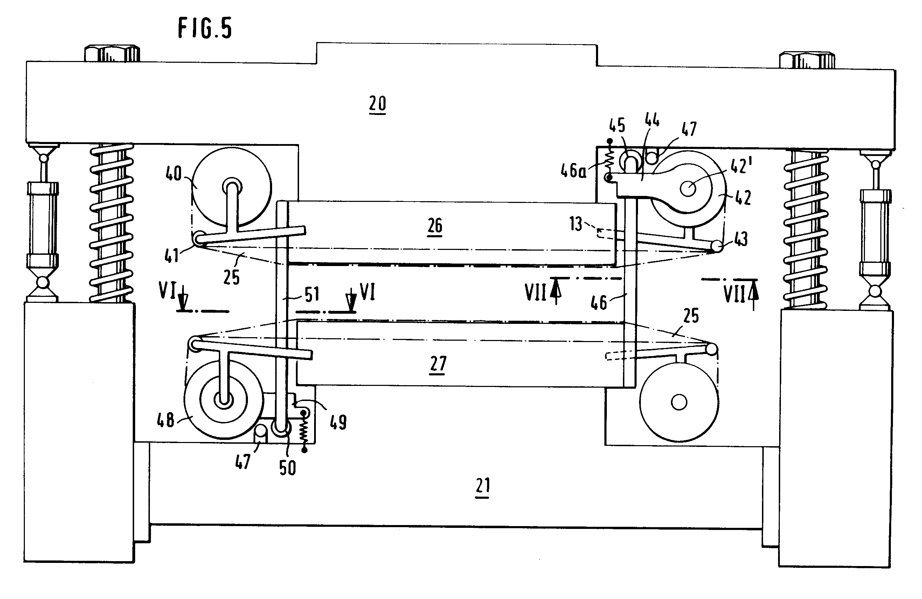

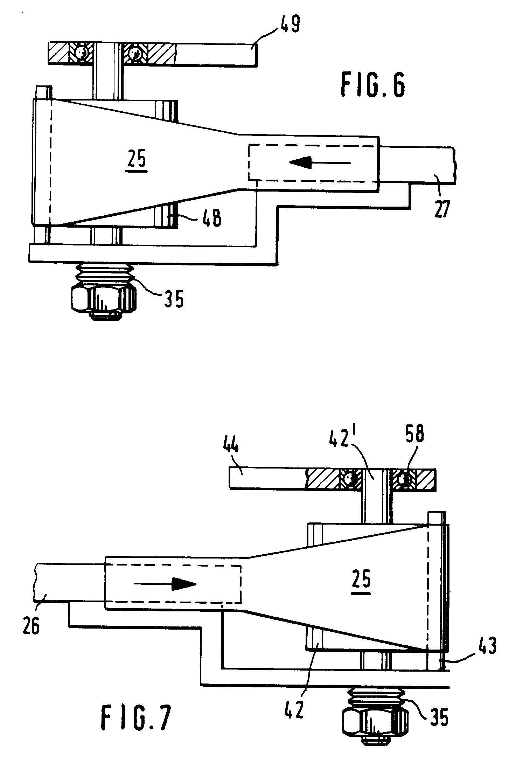

Anhand der Fig.5 und 6 ist schematisch ein von der Schweißbackenbewegung abgeleiteter Antrieb der aufrollenden Rolle dargestellt, der einen taktweisen Transport des Teflonbandes entsprechend dessen Verbrauch über die Schweißleisten gewährleistet.

Das unverbrauchte Teflonband ist auf der Rolle 40 gespeichert, die auf einer Achse oder einer Welle angeordnet ist, die zwischen mit dem zugehörigen Schweißbacken verbundenen Trägern gehaltert ist. Das von der Rolle 40 abgezogene Teflonband ist über die schweißbackenfeste Wendestange 41 geführt. Es läuft sodann im Querschnitt U-förmig über die Schweißleiste und wird dann auf die aufwickelnde Rolle 42 aufgewickelt, der es über die schweißbackenfeste Wendestange 43 zugeführt wird. Die Wickelachse 42' der Rolle 42 ist über Halter 13 unter Zwischenschaltung eines Freilaufs 58 an dem Haltestück 26 befestigt.

Der drehbare rollenseitige Teil des Freilaufs 58 ist mit einem Transporthebel 44 versehen, der am Ende jeder Schweißbackenbewegung gegen eine Rolle 45 stößt, die an einem mit anderen Schweißbacken verbundenen Träger 46 angeordnet ist. Durch Anstoß an die Rolle 45 wird bei jedem Schweißtakt der Hebel 44 um einen kleinen Winkel gedreht. Diese Verdrehung bewirkt eine Drehung der Rolle 42 und entsprechend einen Abzug des Teflonbandes 25 von der Rolle 40. Die Rückstellung des Hebels 44 erfolgt durch die Feder 46a, die zwischen dem Ende des Hebels 44 und einem backenfesten Teil gespannt ist. Durch die Feder 46a wird der Hebel 44 in Anlage an ein schweißbackenfestes Widerlager 47 gehalten.

Entsprechend ist auch die Rolle 48 mit einem Freilauf und einem federbelasteten Hebel 49 versehen. Dieser wird um kleine Winkel durch die Betätigungsrolle 50 verdreht, die an dem Träger 51 gelagert ist, der in der dargestellten Weise mit dem beweglichen Schweißbacken verbunden ist.

## Patentansprüche

1. Schweißvorrichtung zum Schweißen von flachliegenden Bahnen oder Bahnabschnitten aus thermoplastischem Kunststoff mit zwei zueinander parallelen und relativ zueinander heb- und absenkbaren Schweißleisten (22,23), über die jeweils Teflon-Bahnen (25), vorzugsweise glasfaserverstärkte Teflon-Gewebe-bahnen, gespannt sind, die auf beidseits jeder Schweißleiste (22,23) angeordneten Rollen (30,31; 40,42; 48), die deren Auf- und Abwickeln dienen, gehaltert sind,
   **dadurch gekennzeichnet,**
   daß die Rollen (31,32; 40,42; 48) beidseits der schmalen Seiten der Schweißleisten (22,23) auf quer zu diesen verlaufende Achsen (34) gelagert sind, wobei die Teflon-Bahnen (25) in Abhängigkeit vom Grad ihrer Abnutzung um vorgegebene Beträge in Längsrichtung über die Schweißleisten (22,23) weiterbewegbar sind und daß mindestens auf jeweils einer Seite jeder Schweißleiste (22,23) Stütz- oder Führungselemente (28) vorgesehen sind, die mit jeweils einer Schweißleistenseite einen Führungskanal für einen Randbereich des Teflon-Bandes (25) bilden.

2. Schweißvorrichtung nach Anspruch 1, dadurch gekennzeichnet, daß die Führungselemente aus mit den Schweißleisten (22,23) verschraubten Federblechen (28) bestehen.

3. Schweißvorrichtung nach Anspruch 1 oder 2, dadurch gekennzeichnet, daß zwischen den schmalen Enden und den Rollen (40,42; 48) Umlenkstangen oder -rollen (37,38; 41,43) zur Führung der Teflon-Bahnen (25) oder -bänder vorgesehen sind.

4. Schweißvorrichtung nach einem der Ansprüche 1 bis 3, dadurch gekennzeichnet, daß die Rollen (30,31) Naben oder Kerne aufweisen, die von federbelasteten Bremselementen (35) beaufschlagt sind.

5. Schweißvorrichtung nach einem der Ansprüche 1 bis 4, dadurch gekennzeichnet, daß die abziehende Rolle (42) über einen Freilauf (58) auf ihrer Achse (42') gelagert und mit einem Hebel (44) versehen ist, der taktweise um kleine Winkelbeträge verschwenkt und zurückgestellt wird.

6. Schweißvorrichtung nach Anspruch 5, dadurch gekennzeichnet, daß das taktweise Verschwenken der Hebel (44) von der Bewegung des oder der Schweißbalken (22,23) abgeleitet ist und daß die Rückstellung der Hebel (44) durch eine Feder (46a) erfolgt.

## Claims

1. Welding apparatus for welding flat-lying webs or web sections of thermoplastic material with two welding bars (22, 23) which are parallel to each other and which can be lifted and lowered relative to each other, with Teflon webs (25), preferably glass fibre reinforced Teflon woven fabric webs, being respectively stretched there-over, said webs being held on rollers (30, 31; 40, 42; 48) arranged on both sides of each welding bar (22, 23) and being used for winding up and winding off the webs,
   **characterized in**
   that the rollers (31, 32; 40, 42; 48) are mounted on both sides of the narrow side of the welding bars (22, 23) on axes (34) extending transversely thereto, wherein the Teflon webs (25) can be moved furtheron by predetermined amounts dependent on their degree of wear in longitudinal direction over the welding bars (22, 23), and that at least respectively on one side of each welding bar (22, 23) backing elements or guiding elements (28) are provided which, together with one welding bar side, respectively, form a guiding channel for an edge section of the Teflon web (25).

2. Welding apparatus according to claim 1, characterized in that the guiding elements consist of spring steel sheets (28) being connected with the welding bars (22, 23) by screws.

3. Welding apparatus according to claim 1 or 2, characterized in that between the narrow ends and the rollers (40, 42; 48) there are provided idler rods or idler rollers (37, 38; 41, 43) for guiding the Teflon webs (25) or Teflon bands.

4. Welding apparatus according to any one of claims 1 to 3, characterized in that the rollers (30, 31) have hubs or cores with spring-biased braking elements (35) acting thereupon.

5. Welding appparatus according to any one of claims 1 to 4, characterized in that the winding-off roller (42) is mounted through a free-wheel (58) on its axis (42') and provided with a lever (44) which is pivoted in steps of small amounts of angle and which is reset.

6. Welding apparatus according to claim 5, characterized in that the stepwise pivoting of the lever (44) is derived from the movement of the welding bar(s) (22, 23), and that the resetting of the lever (44) is carried out by a spring (46a).

**Revendications**

1. Dispositif de soudage, pour souder des bandes à plat ou des sections de bandes en matière thermoplastique, comportant deux barres de soudage (22,23) parallèles entre elles et capables de se déplacer relativement entre elles vers le haut ou vers le bas, au-dessus desquelles sont respectivement tendues des bandes en Téflon (25), de préférence des bandes en Téflon tissé renforcées par fibres de verre, qui sont maintenues sur des rouleaux (30,31; 40,42;48) placés des deux côtés de chaque barre de soudage (22,23), rouleaux qui servent à enrouler ou à dérouler ces bandes,
caractérisé en ce que
les rouleaux (30,31;40,42;48) sont, des deux côtés des faces étroites des barres de soudage (22,23), logés sur des axes (34) transversaux par rapport à ces dernières, les bandes en Téflon (25) pouvant, en fonction de leur degré d'usure, être déplacées en direction longitudinale au-dessus des barres de soudage (22,23) sur des distances prédéfinies et en ce que des éléments support ou de guidage (28) sont prévus sur une face au moins de chaque barre de soudage (22,23), éléments qui constituent avec au moins une face des barres de soudage un canal de guidage pour un bord de la bande en Téflon (25).

2. Dispositif selon la revendication 1, caractérisé en ce que les éléments de guidage sont des tôles élastiques à ressorts (28) vissées avec les barres de soudage (22,23).

3. Dispositif selon la revendication 1 ou 2, caractérisé en ce que des barres ou des poulies de renvoi (37,38;41,43), servant à guider la ou les bandes en Téflon (25), sont prévues entre les extrémités étroites et les rouleaux (40,42; 48).

4. Dispositif selon l'une des revendications 1 à 3, caractérisé en ce que les rouleaux (30,31) présentent des moyeux ou des noyaux centraux, qui sont chargés par des éléments de freinage (35) à ressorts.

5. Dispositif selon l'une des revendications 1 à 4, caractérisé en ce que le rouleau enrouleur (42) est logé sur son axe (42') par l'intermédiaire d'une roue libre (58) et est pourvu d'un levier (44) qui pivote cycliquement de petits écarts angulaires, pour revenir à sa position initiale.

6. Dispositif selon la revendication 5, caractérisé en ce que le pivotement cyclique du levier (44) dérive du mouvement de la ou des barre(s) de soudage (22,23) et en ce que le levier (44) revient en position sous l'effet d'un ressort (46a).

FIG. 1

FIG. 2

III →

20

26

22

24

23

27

21

III →

# FIG. 2a

FIG.3

FIG. 4

FIG.5

EP 0 317 724 B1

FIG.6

FIG.7